# EUROPÄISCHE PATENTANMELDUNG

(11) **EP 2 447 428 A1**
(43) Veröffentlichungstag der Anmeldung: **02.05.2012**
(21) Anmeldenummer: 11186448.4
(22) Anmeldetag: 25.10.2011
(51) Int. Cl.: E03F 5/042, E03F 5/22, E03F 7/04

(54) **Rückstausicherung**

(30) Priorität: 26.10.2010 DE 102010060160
(71) Anmelder: ACO Severin Ahlmann GmbH & Co. KG, 24768 Rendsburg (DE)
(72) Erfinder: Schäfer, Manfred, 66879 Reichenbach-Steegen (DE)
(74) Vertreter: Bohnenberger, Johannes

(57) **Zusammenfassung**

Rückstausicherung einer Oberflächen-Entwässerungsrinne (2) mit einer Abflussleitung (3) zum Ableiten des Wassers aus der Entwässerungsrinne in ein Kanalnetz, einem Ventil (10;10a;10b) zum Verschließen der Abflussleitung zwischen dem Kanalnetz und der Entwässerungsrinne, einem Überlaufelement (4), das über eine Pumpe (14) mit der Abflussleitung zwischen dem Ventil (10) und dem Kanalnetz verbunden ist zum Pumpen von Wasser aus dem Überlaufelement in das Kanalnetz bei Auftreten eines Rückstaus und einer Überlauföffnung (12) zum Überleiten von Wasser aus der Entwässerungsrinne in das Überlaufelement dann, wenn das Ventil bei Auftreten eines Rückstaus geschlossen ist.

## Beschreibung

Rückstau im Kanalnetz entsteht meistens bei Starkregenereignissen. Hierbei reicht dann die Kapazität des vorhandenen Kanalnetzes nicht aus, um für eine sofortige Ableitung des anfallenden Niederschlagswassers zu sorgen. Bei dieser kurzfristigen Überlastung des Kanalnetzes muss damit gerechnet werden, dass die Haus- oder Grundstücksentwässerungsanlagen zeitweise unter Rückstau stehen. Verstopfungen bzw. Ablagerungen im Kanalnetz oder ein Rohrbruch können ebenfalls einen Rückstau verursachen.

Immer wieder führt außergewöhnlicher Starkregen zu Überflutungen von Kellern und anderen tiefer gelegenen Räumen. Dies liegt meist daran, dass die betroffenen Gebäude nicht ausreichend gegen Rückstau aus der Kanalisation geschützt sind.

Der Einstau im Kanal und in den Hausentwässerungsleitungen kann sich bis zur Straßenoberkante, der so genannten "Rückstauebene", einstellen. Alle Abläufe unterhalb dieser Ebene (Bodenabläufe, Waschbecken, Toiletten u. ä.) sind rückstaugefährdet. Alle Räume, Garagen oder Flächen, die unter der Rückstauebene liegen, müssen daher gegen eindringendes Wasser gesichert werden. Es gibt zurzeit verschiedene Möglichkeiten, um einen zuverlässigen Schutz gegen Rückstauschäden zu erreichen.

Auf dem Markt kann man zum Beispiel Rückstauverschlüsse finden, die den Durchfluss in rückstaugefährdeten Abwasserleitungen durch Klappen, Schieberplatten oder Quetschventile unterbrechen. Rückstauverschlüsse müssen bei Auftreten eines Rückstaus, das heißt spätestens dann, wenn der Rückstauverschluss mit Abwasser gefüllt bzw. nahezu gefüllt ist, selbsttätig schließen und nach Beendigung des Rückstaus einen ungehinderten Wasserablauf ermöglichen. Aus der EP 2 078 793 A1 ist eine Vorrichtung zum selbsttätigen Absperren von Kanalleitungen bei Rückstau bekannt, in der ein Rückstauverschluss einen durch elektrische Energie betriebenen Antrieb für die Betätigung eines selbsttätigen Verschlusses aufweist, wobei der Antrieb des selbsttätigen Verschlusses von einem Schwimmer, der im Rückstauverschluss angeordnet ist und der einen sich mit ihm mitbewegenden Magneten aufweist, ansteuerbar ist. Rückstauverschlüsse bieten jedoch keinen ausreichenden Schutz gegen Rückstau mehr, wenn sie außer Betrieb oder defekt sind. Einen Defekt am Rückstauverschluss erkennt man oft erst bei Auftreten eines Rückstauschadens. Außerdem muss bei Rückstau auf die Benutzung der rückstaugefährdeten Ablaufstellen verzichtet werden.

Alternativ können Hebeanlagen verwenden werden, welche das unter der Rückstauebene anfallendes Abwasser sammeln. Sie bestehen aus einem Sammelbehälter, einer oder zwei Pumpen, und einer Druckleitung. Bei einer richtig geplanten Hebeanlage wird das Abwasser mit Hilfe der Pumpe bis über die Rückstauebene gehoben und fließt dann von oben in die ableitende Sammelleitung. Diese Rohrschleife nennt man Rückstauschleife. Der besondere Vorteil der Hebeanlagen ist, dass sie absolut zuverlässig gegen Rückstau schützen. Ein Rückstau kann nur in der Sammelleitung entstehen, da diese unterhalb der Rückstauebene vollständig dicht ist. Da der Scheitelpunkt der Rückstauschleife oberhalb des maximalen Wasserspiegels im öffentlichen Kanal liegt, kann das Wasser nicht in die gefährdeten Räume fließen. Ferner ermöglichen Hebeanlagen auch bei Rückstau das Abpumpen des Abwassers in die öffentliche Kanalisation, so dass die Hausentwässerung in vollem Umfang betriebsfähig bleibt. Aus der DE 101 32 084 A1 ist eine Abwasser-Hebeanlage bekannt, die eine Förderpumpe, eine Saugöffnung und eine Drucköffnung aufweist, wobei die Pumpe derart von einer Halteeinrichtung gehalten ist, dass sich die Saugöffnung in einem Abstand über dem Boden eines Abwasserbehälters der Abwasser-Hebeanlage befindet, und wobei die Pumpe durch eine Niveau-Regeleinrichtung derart regelbar ist, dass sie sich bei Erreichen einer ersten vorgebbaren bzw. einstellbaren Niveauhöhe des Abwassers einschaltet und sich entweder bei Erreichen einer zweiten vorgebbaren bzw. einstellbaren Niveauhöhe des Abwassers oder nach Ablauf einer vorgebbaren Zeit ausschaltet.

Obwohl Hebeanlagen sehr zuverlässig sind, ist deren Mechanismus oft kompliziert. Außerdem ist deren Einbau aus technischen Gründen nicht immer möglich. Tiefgaragen und Garageneinfahrten sind zum Beispiel oftmals nicht gegen Rückstau geschützt. Grund dafür ist, dass in die Schräge der Einfahrt keine Hebeanlage mit Pumpstation eingebaut werden kann. Weiterhin sind die Platzverhältnisse nach den Stützwänden oftmals nicht vorhanden oder, wenn vorhanden, wird der Einbau einer Hebeanlage sehr teuer aufgrund der großen Einbautiefe. Der Einbau im Garagenraum wird ebenfalls oft nicht realisiert, da die weiße Bodenwanne bei Gefahr von Grundwassereintritt nicht unterbrochen werden soll. Aus ähnlichen Gründen sind die Rinnen, die entlang der Gebäudefronten verlegt werden, nicht gegen Rückstau gesichert.

Es ist daher die Aufgabe der Erfindung, eine Anordnung anzugeben, welche für eine Rinne gegen Rückstau zuverlässig ist und einen platzsparenden, kostengünstigen und einfachen Einbau ermöglicht.

Diese Aufgabe wird durch eine Anordnung mit den Merkmalen des Anspruchs 1 gelöst. Zweckmäßige Fortbildungen des Erfindungsgedankens sind Gegenstand der jeweiligen abhängigen Ansprüche.

Die Erfindung schließt den grundlegenden Gedanken ein, eine Rückstausicherung einer Oberflächen-Entwässerungsrinne mit einer Abflussleitung zum Ableiten des Wassers aus der Entwässerungsrinne in ein Kanalnetz, einem Ventil zum Verschließen der Abflussleitung zwischen dem Kanalnetz und der Entwässerungsrinne und einem Überlaufelement, das über eine Pumpe mit der Abflussleitung zwischen dem Ventil und dem Kanalnetz verbunden ist zum Pumpen von Wasser aus dem Überlaufelement in das Kanalnetz bei Auftreten eines Rückstaus, anzugeben.

Erfindungsgemäß weist das Überlaufelement eine Überlauföffnung zum Überleiten des Wassers aus der Entwässerungsrinne in das Überlaufelement dann auf, wenn das Ventil bei Auftreten eines Rückstaus geschlossen ist.

Die Erfindung ermöglicht bei Rückstau eine automatische Umleitung des Wasserabflusses über ein Überlaufbecken bzw. einen Überlaufschacht in eine Abflussleitung und dann in das Kanalnetz. Durch die Verwendung eines Überlaufelementes mit einer integrierten Pumpe lässt sich die Entwässerung auch während eines überfüllten Straßenkanals aufrecht erhalten und einer Überflutung entgegenwirken. Außerdem ermöglicht die geringe Anzahl der Elemente und deren untereinander leichten Koppelung einen platzsparenden und einfachen Einbau.

Diesbezüglich kann die Entwässerungsrinne aus einem Einlaufkasten mit einer Abdeckung, die mindestens eine Öffnung aufweist, bestehen. Im Besonderen kann die Öffnung ein Schlitz sein. Vorteilhafterweise kann die Abdeckung ein abnehmbares bzw. ein aufklappbares Gitter mit Öffnungen aufweisen. Somit können Blätter oder anderen verstopfenden Materialen aus dem Einlaufkasten auf einfacher Weise entfernt werden. Unter der Rinne kann die Abflussleitung angeordnet werden, welche durch einen Abflussleitungseingang mit dem unteren Teil des Einlaufkastens der Entwässerungsrinne und durch einen Abflussleitungsausgang direkt mit dem öffentlichen Kanalnetz verbunden ist. Die Abflussleitung kann einfach ein Rohr sein, durch das die Rinne mit dem öffentlichen Kanalnetz gekoppelt ist. Durch das Ventil, kann der Abflussleitungseingang bei Rückstau automatisch gesperrt werden. Neben oder unter der Rinne kann das Überlaufelement angeordnet werden, welches die Form eines Beckens haben kann, um das Abflusswasser aus der Rinne durch die Überlauföffnung zu sammeln, wenn der Abflussleitungseingang gesperrt wird. Durch die Verwendung der Pumpe kann das Überlaufelement das gesammelte Abflusswasser, nachdem es einen bestimmten Pegel überschritten hat, in die Abflussleitung und somit in das Kanalnetz fördern. Somit kann eine Rinne, die entlang der Gebäudefronten verlegt wird, auf einfacher Weise gegen Rückstau gesichert werden. Die Überlauföffnung kann unterschiedlichen Formen und Gestaltungen einnehmen. Auf einfacher Weise entspricht die Überlauföffnung einem Loch in der Trennwand zwischen dem Einlaufkasten und dem Überlaufelement. Im Besonderen kann die Überlauföffnung ein Schlitz sein. Die Überlauföffnung kann seitlich des Überlaufelementes an der Trennwand angeordnet werden und oberhalb des Abflussleitungseingangs liegen. Bei der Aktivierung des Ventils bzw. beim Verschließen des Abflussleitungseingangs, fließt das Wasser durch die Abflussleitung nicht aus, sondern fängt an, sich im Einlaufkasten zu sammeln. Wenn der Wasserpegel die Überlauföffnung erreicht, fließt das Wasser über die Öffnung in das Überlaufelement ein. Die Überlauföffnung kann aus mehreren nebeneinander und/oder über einander liegenden Schlitzen bestehen, um die Durchflussmenge des Wassers zu erhöhen. Vorteilhafterweise können die Schlitze nach Bedarf geöffnet bzw. geschlossen werden, um die Durchflussmenge des Wassers einzustellen.

Um zu vermeiden, dass verstopfenden Elemente aus dem Einlaufkasten in das Überlaufelement durchfließen, kann die Überlauföffnung vorzugsweise mit einem Schutzelement, z. B. einem Gitter oder Schmutzfang, versehen werden.

In einer Ausführungsform kann das Ventil der Abflussleitung ein Kugelrückschlagventil sein, bei dem der Rückfluss aus dem öffentlichen Kanalnetz in den Einlaufkasten der Entwässerungsrinne durch eine Schwimmkugel verhindert wird.

Das Ventil kann als Kasten oder Käfig gestaltet werden, in dem die Schwimmkugel freibeweglich ist. Der Kasten kann eine Oberöffnung, welche mit dem Abflussleitungseingang zwischen der Rinne bzw. dem Einlaufkasten und der Abflussleitung gekoppelt ist, und eine Unteröffnung, durch die das Wasser in die Abflussleitung abfließen kann, haben. Die Unteröffnung kann mit einem Schutzmittel vorgesehen werden, das den Durchgang der Kugel aber nicht den Durchfluss des Wassers aus dem Kasten in die Abflussleitung verhindert. Das Schutzmittel kann hierbei ein Gitter sein. Die Oberöffnung kann aus einer kegelförmigen Verengerung bestehen, welche die Schwimmkugel aufnehmen kann, wenn der Kasten im Rückstauzustand durch Wasser gefüllt wird und der Wasserpegel steigt. Somit wird die Kugel vom Rückflusswasser einfach auf die Verengerung gerückt und der Abflussleitungseingang hermetisch gesperrt, um ein Auslaufen des Wassers aus der Entwässerungsrinne zu vermeiden. Wenn das Rückstauproblem gelöst ist bzw. wenn das Wasser aus dem Kasten ausgeflossen ist, sinkt der Wasserpegel wieder und die Kugel wird aus der Oberöffnung zurückversetzt. Der Durchmesser der Kugel ist derart gestaltet, dass dieser genügend klein ist, um das Abfließen des Wassers im normalen Entwässerungszustand nicht zu behindern, und genügend groß ist, um zu verhindern, dass die Kugel durch das Schutzmittel, z.B. durch den Gitter, durchläuft. Die Kugel kann hierbei aus Plastik, Gummi oder ähnlichem Material hergestellt werden, um zu ermöglichen, dass diese im Wasser schwimmen kann. Ein solches selbsttätiges Ventil bietet den großen Vorteil, dass kein zusätzliches (elektrisches oder mechanisches) Mittel, wie zum Beispiel ein Sensor oder ein Schalter, notwendig ist, um den Abflussleitungseingang bei Auftreten eines Rückstaus automatisch zu sperren.

In einer alternativen Ausführungsform kann das Ventil in der Abflussleitung ein beliebiges Sperrmittel sein, das bei Rückstau automatisch den Abflussleitungseingang verschließt. Insbesondere kann das Sperrmittel ein Kugelventil aufweisen. Hierbei kann das Ventil durch die Verwendung eines mit entsprechenden Sensoren (z. B. Wassererkennungssensor, Drucksensor, Feuchtesensor, o. ä.) gekoppelten Antriebsmittels gesteuert werden. Somit kann das Ventil automatisch gesperrt werden, sobald der Sensor das Vorhandensein von Wasser in der Abflussleitung erkennt. Alternativ dazu kann das Ventil durch einen Schwimmerschalter aktiviert bzw. deaktiviert werden.

In einer alternativen Ausführungsform kann das Ventil in der Abflussleitung ein Drei-Wege-Ventil sein. Hier hat die Kugel statt einer Durchgangsbohrung eine T-Bohrung, die drei Leitungen (z.B. eine mit der Entwässerungsrinne gekoppelte Oberleitung, eine mit der Abflussleitung gekoppelte Unterleitung und eine mit dem Überlaufelement gekoppelte seitliche Leitung) verbindet. Damit kann die zuführende Strömung aus dem Einlaufkasten der Entwässerungsrinne, abhängig von der Kugelstellung, in die Abflussleitung (im normalen Entwässerungszustand) oder in das Überlaufelement (im Rückstauzustand) geleitet werden. Hierbei steht bei einer solchen Ausführungsform die Überlauföffnung mit der seitlichen Leitung direkt in Verbindung. Auch in diesem Falle kann das Ventil durch die Verwendung eines mit entsprechenden Sensoren (z. B. Wassererkennungssensor, Drucksensor, Feuchtesensor, o. ä.) gekoppelten Antriebsmittels oder eines Schwimmerschalters gesteuert werden.

In einer weiteren Ausführungsform kann eine Druckleitung zwischen der Abflussleitung und der Pumpe angeordnet werden. Vorzugsweise kann die Druckleitung ein Rohr sein, das aus hartem Kunststoff, insbesondere Polyvinylchlorid (PVC-U), hergestellt wird, um mögliche Korrosionsprobleme zu vermeiden.

In einer noch weiteren Ausführungsform kann die Druckleitung von der Abflussleitung trennbar sein. Zu diesem Zweck kann die Druckleitung ein Anschlussmittel, wie z. B. eine Verschraubung aufweisen, welches zwischen der Abflussleitung und der Pumpe angeordnet ist. Somit können die Druckleitung selbst und die an die Druckleitung gekoppelten Teile aus dem Überlaufelement zur Wartung (Reparatur oder Ersatz) entnommen werden. Dafür kann das Überlaufelement mit einer dichten Klappe vorgesehen werden, die einem Monteur leicht zugänglich ist. Die Klappe kann seitlich oder oberseitig des Überlaufbeckens angeordnet sein.

Vorzugsweise kann die Pumpe mit einem Ende der Druckleitung in Verbindung stehen, so dass das Wasser aus dem Überlaufelement in die Abflussleitung durch die Druckleitung gefördert wird. In einer Ausführungsform kann die Pumpe eine Kreiselpumpe, insbesondere eine Tauchpumpe sein, die trennbar an der Druckleitung eingebaut wird. Da die Pumpe durch elektrischen Strom von einem Motor angetrieben wird, sind alle spannungsführenden Teile isoliert. Für den Anschluss der elektrischen Leitungen kann das Überlaufelement mit einem Kabelleerrohranschluss vorgesehen werden. Durch das Leerrohr können die elektrischen Kabel mit einer externen Anschlussdose verbunden werden. Selbstverständlich kann der Motor, der durch eine Kabelverbindung die Pumpe antreibt, außerhalb des Überlaufelements angeordnet werden. Um Kondenswasser zu vermeiden, wird das Kabelleerrohr nicht luftdicht verschlossen.

Die Pumpe kann ferner eine Schaltvorrichtung, insbesondere einen Schwimmerschalter, aufweisen, die durch einen von Wasser bewegten Schwimmer betätigt wird. Der Schwimmerschalter dient zur automatisierten Steuerung von Füllständen im Überlaufbecken und weist eine Hysterese zwischen dem Ein- und Ausschaltpunkt auf, wodurch sich entsprechende Pegelschwankungen ergeben. Überschreitet das Abflusswasser im Überlaufelement einen Bezugspegel, wird der Schwimmerschalter eingeschaltet und die Pumpe aktiviert, um das Wasser in die Abflussleitung durch die Druckleitung zu fördern. Unterschreitet das Abflusswasser im Überlaufelement den Bezugspegel, wird der Schwimmerschalter ausgeschaltet und die Pumpe deaktiviert.

Die Druckleitung ist vorzugsweise mit einem zwischen der Abflussleitung und der Pumpe, insbesondere zwischen dem Anschlussmittel und der Pumpe, angeordneten Rückschlagventil versehen, das den Durchgang des Wassers in der Strömrichtung aus der Abflussleitung in das Überlaufelement selbsttätig sperrt. Das Rückschlagventil kann aus einer Verengerung bestehen, die durch eine Schwimmkugel verschlossen wird. Das Ventil ist derart gestaltet, dass sich die Kugel durch die Schwerkraft in der Verengerung anordnet und das Ventil hermetisch verschließt, um zu vermeiden, dass in der Druckleitung vorhandenes Wasser (z.B. beim Rückstau) in das Überlaufbecken ausfließt. Wird dagegen durch die Verwendung der Pumpe das Wasser aus dem Überlaufbecken in die Druckleitung gefördert, lässt sich die Schwimmkugel von der geförderten Wasserströmung in eine seitliche Aussparung des Ventils versetzen, so dass das Ventil geöffnet wird. Die seitliche Aussparung ist mit einer Steigung gestaltet, damit die Kugel durch Schwerkraft wieder in die Verschlussposition auf die Verengerung versetzt wird, wenn kein Wasser mehr gefördert wird.

Alternativ kann die Sperrung mit einer Feder gelöst werden, die entweder eine Kugel, ein Kegel, eine Klappe oder eine Membran in die jeweilige Verschlussposition drückt.

In einer weiteren Ausführungsform kann ferner die Druckleitung ein zusätzliches Ventil, insbesondere einen Kugelhahn aufweisen, der zwischen der Pumpe und der Abflussleitung, insbesondere zwischen dem Rückschlagventil und dem Anschlussmittel angeordnet ist. Dieses zusätzliche Ventil kann manuell oder durch ein Steuerungsmittel angetrieben werden. Somit kann die Druckleitung nach Bedarf geöffnet bzw. gesperrt werden. Dies kann besonders nützlich sein, wenn die Druckleitung von der Abflussleitung (z.B. zur Wartung) getrennt wird, so dass kein Wasser in die Druckleitung einläuft.

In einer noch weiteren Ausführungsform, kann ein weiteres Ventil zwischen der Abflussleitung und dem Anschlussmittel angeordnet werden, um zu vermeiden, dass Wasser aus der Abflussleitung in das Überlaufelement durchfließt, wenn die Druckleitung getrennt ist.

Um Korrosionsprobleme zu vermeiden, können sowohl das Anschlussmittel als auch die verwendeten Ventile der Druckleitung aus Kunststoff, insbesondere Polyvinylchlorid (PVC-U), hergestellt werden.

In einer Ausführungsform kann die Abdeckung des Überlaufelementes Einlauföffnungen für Oberflächenwasser aufweisen. Diese Einlauföffnungen können insbesondere Schlitze sein. Vorteilhafterweise kann die Abdeckung ein abnehmbares bzw. ein aufklappbares Gitter mit Schlitzen aufweisen.

Das Vorhandensein einer Abdeckung mit Einlauföffnungen ermöglicht die Verwendung des Überlaufelementes als zusätzliche Rinne, um die Abflusskapazität der Anordnung zu erhöhen.

Sollten Einlauföffnungen für Oberflächenwasser in der Abdeckung des Überlaufelements partiell oder komplett vorgesehen sein, so kann die Überlauföffnung ferner eine zusätzliche Funktion einnehmen. Es kann nämlich Wasser durch die Einlauföffnungen abfließen und über die Überlauföffnung in die Abflussleitung ausfließen. Aus diesem Zweck kann eine Überleitungseinrichtung zum Ableiten des Oberflächenwassers in die Rinne bzw. in den Einlaufkasten vorgesehen sein.

In dem Falle, dass die Einlauföffnungen über dem Überlaufelement angebracht sind, kann die Überleitungseinrichtung eine erste Ableitungswand aufweisen, die von dem unteren Teil der Überlauföffnung an der Trennwand zwischen dem Überlaufelement und dem Einlaufkasten bis zu den Einlauföffnungen des Überlaufelementes reicht, um das einströmende Wasser aus den Einlauföffnungen - mittels der ersten Ableitungswand - in den Einlaufkasten zu leiten. Hierbei ist die Überleitungseinrichtung derart gestaltet, dass beim Rückstau bzw. beim Verschließen des Ventils das Abfließen des Wassers aus dem Einlaufkasten in das Überlaufelement möglich ist.

Um einen platzsparenden Einbau zu ermöglichen, kann auf die Verwendung einer Standard-Entwässerungsrinne verzichtet werden und als Rinne nur der Einbau des Überlaufelements mit Einlauföffnungen dienen. In diesem Falle ist die Anordnung derart konzipiert, dass das Überlaufelement, welches die Doppelfunktion einer Rinne und eines Überlaufbeckens einnimmt, mit dem Abflussleitungseingang direkt gekoppelt ist. Im normalen Entwässerungszustand fließt das Oberflächenwasser ausschließlich durch die Einlauföffnungen ein und fließt mittels der Überleitungseinrichtung, z.B. einer Ableitungswand, durch den Abflussleitungseingang in die Abflussleitung und in den öffentlichen Kanal weiter. Beim Rückstau bzw. beim automatischen Verschließen des Abflussleitungseingangs, wird dagegen das Wasser - immer mittels der Überleitungseinrichtung - in das Überlaufelement geleitet. Bei Steigung des Abflusswassers im Überlaufelement wird die Pumpe aktiviert und das Abflusswasser über die Druckleitung in die Abflussleitung gedrückt und in den überfüllten Kanal gefördert.

Vorzugsweise kann die Abflussleitung einen drehbaren Auslauf aufweisen, um die Abflussleitung auf einfacher Weise mit dem öffentlichen Kanalnetz zu verbinden. Hierbei kann die Abflussleitung eine Drehung des Auslaufs von 360° zulassen. Somit kann die vorliegende Anordnung an beliebiger Stelle, unabhängig von dem Lagewinkel des Kanalnetzanschlusses, eingebaut werden.

Vorzugsweise wird die Entwässerungsrinne am Ende eines Gefälles, zum Beispiel einer Tiefgarageneinfahrt, angeordnet. Hierbei kann das Überlaufelement mit einer schrägen Abdeckung vorgesehen werden, deren Seitenwände derart gestaltet sind, dass die Abdeckung an die Neigung der Einfahrt angepasst ist. Insbesondere kann die Abdeckung eine Steigung aufweisen, welche das vom Gefälle herrührende Abflusswasser direkt in die Rinne leitet. Hierfür muss die Steigung der Abdeckung von der Rinne bis zur Neigung der Einfahrt reichen. Abhängig davon, ob über dem Überlaufelement Einlauföffnungen für Oberflächenwasser vorhanden sind, kann die schräge Abdeckung derart gestaltet sein, dass diese nur im Bereich, wo keine Einlauföffnungen vorgesehen sind, angebracht wird.

Vorteilhafterweise können die Abflussleitung und das Überlaufelement mit der Entwässerungsrinne modular kombiniert werden. In anderen Worten können diese Elemente modularartige Einzelkomponenten sein, welche z. B. einzeln ausgetauscht werden können und welche durch Verschlussmittel, wie z. B. Verschraubungen, Klemmen o. ä., untereinander verbunden werden. Darüber hinaus kann die Anordnung derart konzipiert werden, dass die einzelnen Elemente je nach Bedarf miteinander kombiniert werden können. Daher können die Entwässerungsrinne, die Abflussleitung und das Überlaufelement gemäß unterschiedlicher Konfigurationen angeordnet werden. Eine erste Konfiguration sieht eine Anordnung vor, welche aus einer Rinne, einer Abflussleitung mit einem Ventil und einem Überlaufelement mit einer Pumpe besteht. Diese Elemente können gemäß dieser Reihenfolge kombiniert werden. Um die Abflusskapazität zu erhöhen, können die Abflussleitung und das Überlaufelement mit mehreren Rinnen kombiniert werden. Eine weitere Konfiguration sieht zum Beispiel zwei Rinnen vor, welche jeweils mit der Abflussleitung und dem Überlaufelement gekoppelt sind. In einer noch weiteren Konfiguration kann eine dritte Rinne zwischen der Abflussleitung und dem Überlaufelement eingefügt werden. Selbstverständlich ist die Anordnung der Elemente nicht nur auf diese Konfigurationen beschränkt.

Die Zusammensetzung dieser Elemente kann somit an die Gegebenheiten der Umgebungen angepasst werden. Die Rinne, die Abflussleitung und das Überlaufelement können zum Beispiel derart kombiniert werden, dass sie an die Einfahrt einer Tiefgarage angepasst werden. Diesbezüglich kann die Rinne eine entlang der Garageneinfahrt angeordnete Entwässerungsrinne sein, durch die das Oberflächenwasser abfließt. Wie bereits erwähnt, ermöglicht die Modularfähigkeit dieser Anordnung eine Anpassung an die Umgebungsgegebenheiten. Sollte zum Beispiel die Steigung der Garageneinfahrt steiler sein, so können mehrere Rinnen eingefügt bzw. kombiniert werden.

Vorteile und Zweckmäßigkeiten der Erfindung ergeben sich im Übrigen aus der nachfolgenden Beschreibung ausgewählter Ausführungsbeispiele anhand der Figuren. Von diesen zeigen:
Fig. 1 eine schematische Darstellung einer Anordnung gemäß der Erfindung,
Fig. 2a und 2b schematische Darstellungen der Koppelung zwischen der Entwässerungsrinne und dem Überlaufelement gemäß zweier Ausführungsformen der Erfindung,
Fig. 3a bis 3c schematische Darstellungen des Ventils in der Abflussleitung und dessen Arbeitsweise gemäß einer Ausführungsform der Erfindung,
Fig. 4a und 4b schematische Darstellungen des Ventils in der Abflussleitung und dessen Arbeitsweise gemäß einer anderen Ausführungsform der Erfindung, und
Fig. 5 eine schematische Darstellung einer Anordnung gemäß einer weiteren Ausführungsform der Erfindung.

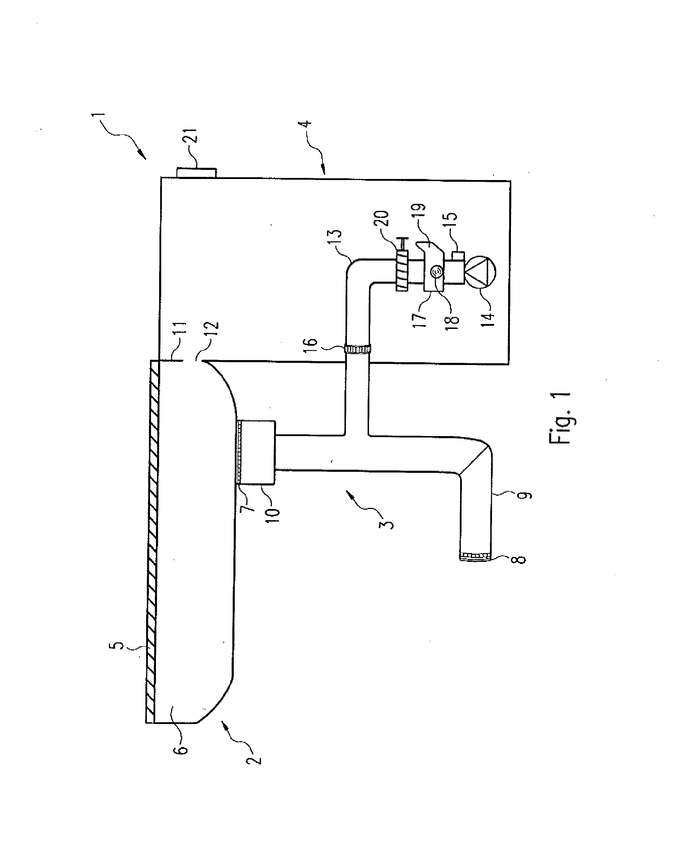

Fig. 1 zeigt eine Rückstausicherung 1 einer Oberflächen-Entwässerungsrinne 2, mit einer Abflussleitung 3 und einem Überlaufelement 4. Auf dem Oberteil der Rinne 2 ist ein aufklappbares Gitter 5 vorgesehen, welches Schlitze aufweist. Durch das Gitter 5 fließt das Abflusswasser, z. B. der Regen, in den Einlaufkasten 6 ein. Unter der Rinne 2 ist die Abflussleitung 3 angeordnet, um das Abflusswasser durch den Abflussleitungseingang 7 aus dem Einlaufkasten 6 aufzunehmen. Die Abflussleitung 3 weist ferner einen Abflussleitungsausgang 8 mit einem drehbaren Auslauf 9, durch den das Abflusswasser in das öffentliche Kanalnetz ausläuft. Am Abflussleitungseingang 7 weist die Abflussleitung 3 ein Ventil 10 zum automatischen Verschließen des Abflussleitungseingangs 7 im Falle eines Rückstaus auf. Neben dem Einlaufkasten 6 ist das Überlaufelement 4 angeordnet. Hierbei ist das Überlaufelement 4 durch eine in der Trennwand 11 zwischen dem Einlaufkasten 6 und dem Überlaufelement 4 vorhandene Überlauföffnung 12 mit dem Einlaufkasten 6 gekoppelt. Außerdem weist das Überlaufelement 4 eine Druckleitung 13 aus PVC-U auf, welche an einem Ende mit der Abflussleitung 3 zwischen dem Ventil 10 und dem Abflussleitungsausgang 8 und am anderen Ende mit einer Tauchpumpe 14 nebst Schwimmerschalter 15 verbunden ist. Die Druckleitung 13 weist ferner eine Verschraubung 16 aus PVC-U und ein Rückschlagventil 17 mit einer Schwimmkugel 18 auf. Das Rückschlagventil weist ferner eine seitliche Aussparung 19 auf, in die die Kugel 18 versetzt werden kann. Schließlich ist zwischen der Verschraubung 16 und dem Rückschlagventil 17 ein Ventil 20 aus PVC-U und im Oberteil des Überlaufelementes 4 ein Kabelleerrohranschluss 21 angeordnet.

Im normalen Entwässerungszustand fließt das Wasser durch das Gitter 5 oder aus einer angeschlossenen Entwässerungsrinne in den Einlaufkasten 6 ein und fließt durch den Abflussleitungseingang 7 in die Abflussleitung 3 und über den Auslauf 9 in den öffentlichen Kanal weiter. Hierbei ist das Ventil 10 nicht aktiviert. Beim Rückstau verschließt das Ventil 10 den Abflussleitungseingang 7. Das Abflusswasser, welches über das Gitter 5 (oder die Entwässerungsrinne) einfließt, staut sich im Einlaufkasten 6 bis zur Überlauföffnung 12 auf und fließt in das Überlaufelement 4. Bei Steigung des Abflusswassers im Überlaufelement 4, wird die Tauchpumpe 14 durch den Schwimmerschalter 15 aktiviert. Somit wird das Abflusswasser über die Druckleitung 13 in die Abflussleitung 3 gedrückt und über den Auslauf 9 in den überfüllten Kanal gefördert. Hierbei wird die Schwimmkugel 18 des Rückschlagventils 17 durch den Abflusswasserdruck in die Aussparung 19 versetzt.

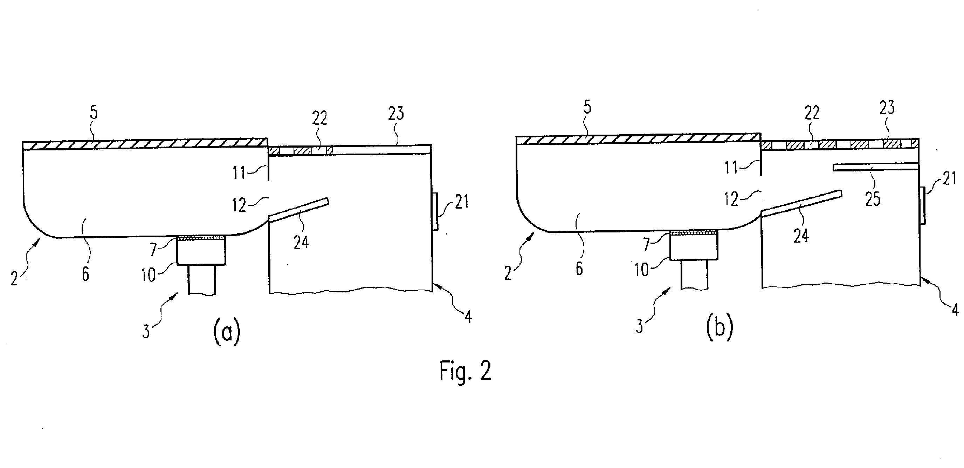

Fig. 2a zeigt ein Detail der Überlauföffnung 12 gemäß der Ausführungsform, wonach Einlauföffnungen 22 über die Abdeckung 23 des Überlaufelements 4 partiell angebracht sind. Hierbei ist eine Überleitungseinrichtung in Form einer schrägen Ableitungswand 24 zwischen dem Überlaufelement 4 und dem Einlaufkasten 6 vorhanden, wobei die schräge Ableitungswand 24 vom unteren Teil der Überlauföffnung 12 an der Trennwand 11 steigend bis zu den Einlauföffnungen 22 des Überlaufelementes 4 reicht.

Fig. 2b zeigt ein Detail der Überlauföffnung 12 gemäß der Ausführungsform, wonach Einlauföffnungen 22 über die Abdeckung 23 des Überlaufelements 4 komplett angebracht sind. Hierbei ist zusätzlich zur schrägen Ableitungswand 24, eine waagrechte Ableitungswand 25 vorgesehen, die von der Außenwand 26 des Überlaufelementes 4, welche sich gegenüber der Trennwand 11 befindet, bis zur schrägen Ableitungswand 24 reicht. Die waagrechte Ableitungswand 25 befindet sich oberhalb der schrägen Ableitungswand 24 und am distalen Ende überlappt diese die schräge Ableitungswand 24.

In beiden Fällen der Figuren 2a und 2b dient das Überlaufelement 4 als zusätzliche Rinne. Hierbei wird das aus den Einlauföffnungen 22 des Überlaufelementes 4 einströmende Wasser im normalen Entwässerungszustand ausschließlich in den Einlaufkasten 6 und dann in die Ablaufleitung 3 geleitet, wohingegen das aus dem Gitter 5 der Rinne 2 und aus den Einlauföffnungen 22 des Überlaufelementes 4 einströmende Wasser im Rückstauzustand, bzw. bei Verschließen des Ventils 10, in das Überlaufelement 4 geleitet.

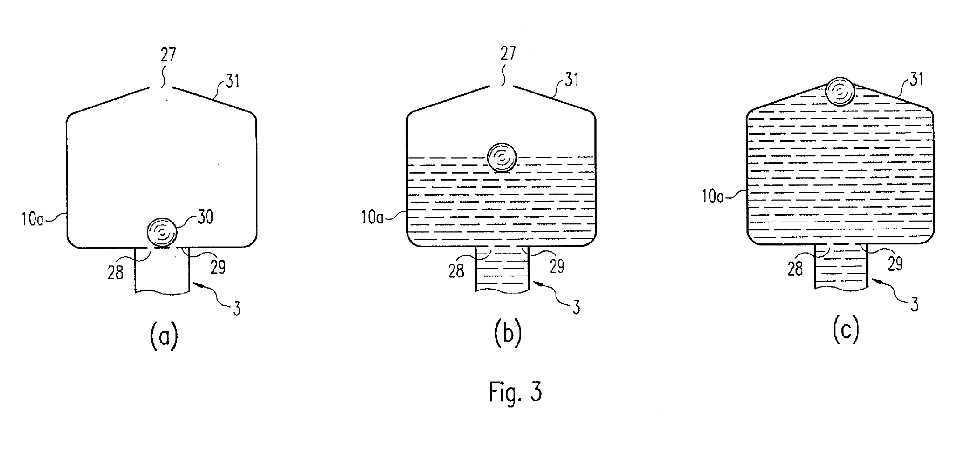

Fig. 3a bis 3c zeigen die Arbeitsweise eines Kugelrückschlagventils 10a, das als Ventil zum automatischen Verschließen des Abflussleitungseingangs 7 dient. Dieses Ventil 10a hat die Form eines Kastens mit einer Oberöffnung 27 (am Abflussleitungseingang 7), durch die das Abflusswasser aus der Rinne 2 abfließt und einer Unteröffnung 28 mit einem Schutzgitter 29, durch die das Abflusswasser in die Abflussleitung 3 abfließt und mit einer freibeweglichen Schwimmkugel 30. Insbesondere besteht die Oberöffnung 27 aus einer kegelförmigen Verengung 31.

Beim normalen Entwässerungszustand fließt das Abflusswasser aus der Oberöffnung 27 durch die Unteröffnung 28 in den Auslauf 9. Die Schwimmkugel 30 behindert hierbei den Abfluss nicht (siehe Fig. 3a). Beim Rückstau drückt das Wasser aus dem Kanalnetz über die Abflussleitungsausgang 8 zurück und gelangt in den Ventilkasten (siehe Fig. 3b). Die Schwimmkugel 30 schwimmt auf und gelangt somit in die Verengung 31. Hierdurch wird die Oberöffnung 27 bzw. der Abflussleitungseingang 7 durch die Schwimmkugel 30 verschlossen (siehe Fig. 3c).

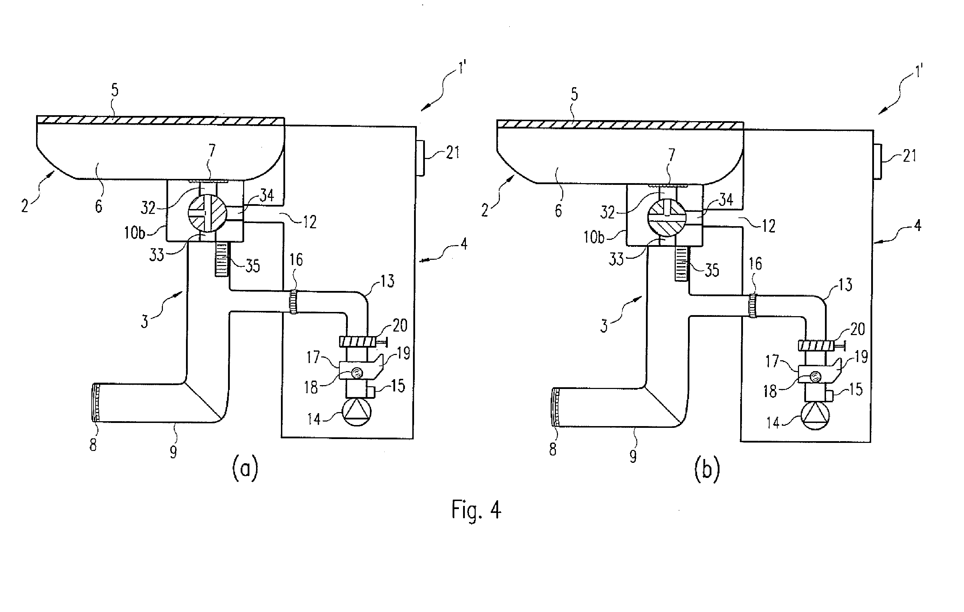

Fig. 4a und 4b zeigen eine Rückstausicherung 1', in der ein Drei-Wege-Ventil 10b als Ventil zum automatischen Verschließen des Abflussleitungseingangs 7 dient. Die Kugel des Drei-Wege-Ventil 10b weist eine T-Bohrung auf, die drei Leitungen verbindet. Die erste Leitung (Oberleitung) 32 ist mit dem Einlaufkasten 6 der Entwässerungsrinne 2, die zweite Leitung (Unterleitung) 33 ist mit der Abflussleitung 3 und die dritte Leitung (seitliche Leitung) 34 ist mit dem Überlaufelement 4 gekoppelt. Im normalen Entwässerungszustand ist das Ventil 10b derart positioniert, dass die zuführende Strömung aus der Rinne 2 in die Abflussleitung 3 geleitet wird (siehe Fig. 4a). Im Rückstauzustand ist dagegen das Ventil 10b derart gestellt, dass die zuführende Strömung aus der Rinne 2 in das Überlaufelement 4 geleitet wird (siehe Fig. 4b). Hierbei wird die Position des Drei-Wege-Ventils 10b durch die Verwendung eines am Ventil 10b gekoppelten Schwimmerschalters 35 geändert.

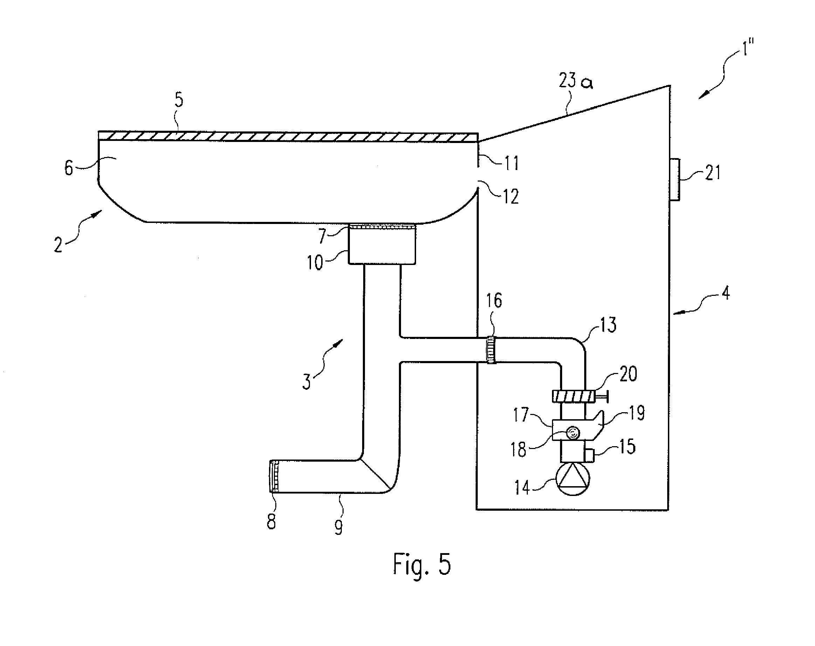

Fig. 5 zeigt eine Rückstausicherung 1" wie in Fig. 1, in der das Überlaufelement 4 zusätzlich eine schräge Abdeckung 23a aufweist, welche an die Neigung einer Tiefgarageneinfahrt angepasst ist. Hierbei fließt das Abflusswasser (direkt und/oder über die Steigung der Abdeckung 23a) durch das Gitter 5 in den Einlaufkasten 6 und somit in das Kanalnetz.

### Bezugszeichenliste:

- 1.: Rückstausicherung
- 1'.: Rückstausicherung
- 1".: Rückstausicherung
- 2.: Entwässerungsrinne
- 3.: Abflussleitung
- 4.: Überlaufelement
- 5.: Gitter
- 6.: Einlaufkasten
- 7.: Abflussleitungseingang
- 8.: Abflussleitungsausgang
- 9.: Auslauf
- 10.: Ventil
- 10a.: Kugelrückschlagventil
- 10b.: Drei-Wege-Ventil
- 11.: Tennwand
- 12.: Überlauföffnung
- 13.: Druckleitung
- 14.: Tauchpumpe
- 15.: Schwimmerschalter
- 16.: Verschraubung
- 17.: Rückschlagventil
- 18.: Schwimmkugel
- 19.: Aussparung
- 20.: Kugelhahn
- 21.: Kabelleerrohranschluss
- 22.: Einlauföffnungen
- 23.: Abdeckung
- 23a: Schräge Abdeckung
- 24.: Erste Ableitungswand (Schräge Ableitungswand)
- 25.: Zweite Ableitungswand (Waagerechte Ableitungswand)
- 26.: Außenwand
- 27.: Oberöffnung
- 28.: Unteröffnung
- 29.: Schutzgitter
- 30.: Schwimmkugel
- 31.: Verengerung
- 32.: Oberleitung
- 33.: Unterleitung
- 34.: Seitliche Leitung
- 35.: Schwimmerschalter

## Patentansprüche

1. Rückstausicherung einer Oberflächen-Entwässerungsrinne (2), umfassend:
eine Abflussleitung (3) zum Ableiten des Wassers aus der Entwässerungsrinne (2) in ein Kanalnetz;
ein Ventil (10; 10a; 10b) zum Verschließen der Abflussleitung (3) zwischen dem Kanalnetz und der Entwässerungsrinne (2);
ein Überlaufelement (4), das über eine Pumpe (14) mit der Abflussleitung (3) zwischen dem Ventil (10) und dem Kanalnetz verbunden ist zum Pumpen von Wasser aus dem Überlaufelement (4) in das Kanalnetz bei Auftreten eines Rückstaus; und
eine Überlauföffnung (12) zum Überleiten von Wasser aus der Entwässerungsrinne (2) in das Überlaufelement (4) dann, wenn das Ventil (10) bei Auftreten eines Rückstaus geschlossen ist.

2. Rückstausicherung nach Anspruch 1, wobei das Ventil (10) ein Ventil (10a) mit einem Schwimmer oder einer Schwimmkugel (30) ist, durch die der Rückfluss aus dem Kanalnetz in die Entwässerungsrinne verhindert wird.

3. Rückstausicherung nach einem der vorhergehenden Ansprüche, insbesondere nach Anspruch 1, wobei das Ventil (10) eine durchbohrte Kugel als Absperrkörper aufweist.

4. Rückstausicherung nach einem der vorhergehenden Ansprüche, insbesondere nach Anspruch 1 oder 3, wobei das Ventil (10) ein Drei-Wege-Ventil (10b) ist.

5. Rückstausicherung nach einem der vorhergehenden Ansprüche, insbesondere nach Anspruch 4, wobei das Drei-Wege-Ventil (10b) eine mit der Entwässerungsrinne (2) gekoppelte Oberleitung (32), eine mit der Abflussleitung (3) gekoppelte Unterleitung (33) und eine mit dem Überlaufelement (3) gekoppelte seitliche Leitung (34) verbindet, wobei die seitliche Leitung (34) mit der Überlauföffnung (12) direkt in Verbindung steht.

6. Rückstausicherung nach einem der vorhergehenden Ansprüche, insbesondere nach Anspruch 1, 3, 4 oder 5, wobei das Ventil (10b) mit einem Pegelfühler oder Schwimmerschalter (35) zur automatischen Aktivierung des Ventils gekoppelt ist.

7. Rückstausicherung nach einem der vorhergehenden Ansprüche, ferner umfassend eine zwischen der Abflussleitung (3) und der Pumpe (14) angeordnete Druckleitung (13).

8. Rückstausicherung nach einem der vorhergehenden Ansprüche, insbesondere nach Anspruch 7, wobei die Druckleitung (13) von der Abflussleitung (3) trennbar ist.

9. Rückstausicherung nach einem der vorhergehenden Ansprüche, wobei die Pumpe eine Tauchpumpe (14) mit einem Schwimmerschalter (15) ist.

10. Rückstausicherung nach einem der vorhergehenden Ansprüche, insbesondere nach einem der Ansprüche 7 bis 9, wobei die Druckleitung (13) ein Rückschlagventil (17) aufweist, welches ein Strömen von Wasser in das Überlaufelement (4) beim Rückstau verhindert.

11. Rückstausicherung nach einem der vorhergehenden Ansprüche, insbesondere nach einem der Ansprüche 7 bis 10, wobei die Druckleitung (13) ein zwischen der Pumpe (14) und der Abflussleitung (3) angeordnetes Ventil (20) aufweist.

12. Rückstausicherung nach einem der vorhergehenden Ansprüche, wobei das Überlaufelement (4) eine Abdeckung (23) mit Einlauföffnungen (22) für Oberflächenwasser und eine Überleitungseinrichtung (24, 25) zum Ableiten des Oberflächenwassers in die Entwässerungsrinne (2) aufweist.

13. Rückstausicherung nach einem der vorhergehenden Ansprüche, wobei die Abflussleitung (3) einen drehbaren Auslauf (9) aufweist.

14. Rückstausicherung nach einem der vorhergehenden Ansprüche, wobei die Oberflächen-Entwässerungsrinne (2) am Ende eines Gefälles angeordnet ist und das Überlaufelement (4) eine Abdeckung (23a) aufweist, die an die Neigung des Gefälles angepasst ist.

15. Rückstausicherung nach einem der vorhergehenden Ansprüche, wobei die Abflussleitung (3) und das Überlaufelement (4) mit der Entwässerungsrinne (2) modular kombinierbar sind.
